**Europäisches Patentamt**

**European Patent Office**

**Office européen des brevets**

(19)

(11) Veröffentlichungsnummer: **0 140 831**

**B1**

(12) ## EUROPÄISCHE PATENTSCHRIFT

(45) Veröffentlichungstag der Patentschrift:
20.07.88

(21) Anmeldenummer: 84810426.1

(22) Anmeldetag: 29.08.84

(51) Int. Cl.⁴: **B 23 F 5/02,** G 05 D 13/62,
G 05 B 19/18

(54) **Verfahren und Anordnung zum Beseitigen der Zahnflanken-Welligkeit auf Zahnradproduktionsmaschinen.**

(30) Priorität: 18.10.83 CH 5659/83

(43) Veröffentlichungstag der Anmeldung:
08.05.85 Patentblatt 85/19

(45) Bekanntmachung des Hinweises auf die Patenterteilung:
20.07.88 Patentblatt 88/29

(84) Benannte Vertragsstaaten:
DE GB IT

(56) Entgegenhaltungen:
EP-A-0 021 329
EP-A-0 079 965
DE-A-2 161 243
DE-B-2 724 664

(73) Patentinhaber: **Maag- Zahnräder und -Maschinen Aktiengesellschaft, Hardstrasse 219, CH- 8023 Zürich (CH)**

(72) Erfinder: **Bloch, Peter, Dr. sc. techn.,
Sonnenbergstrasse 4, CH- 8968 Mutschellen (CH)**
Erfinder: **Schneider, Otto, dipl. El.- Ing. HTL,
Rütihof 359, CH- 5722 Gränichen (CH)**
Erfinder: **Donner, Meinrad, Kirchweg 5, CH- 8855
Nuolen (CH)**

(74) Vertreter: **Travnicek, Richard, Maag Zahnräder &
-Maschinen AG PATENTABTEILUNG Neugasse 6,
CH- 8005 Zürich (CH)**

## Beschreibung

Die Erfindung betrifft ein Verfahren und eine Anordnung der im Oberbegriff der Patentansprüche 1 bzw. 4 angegebenen Art.

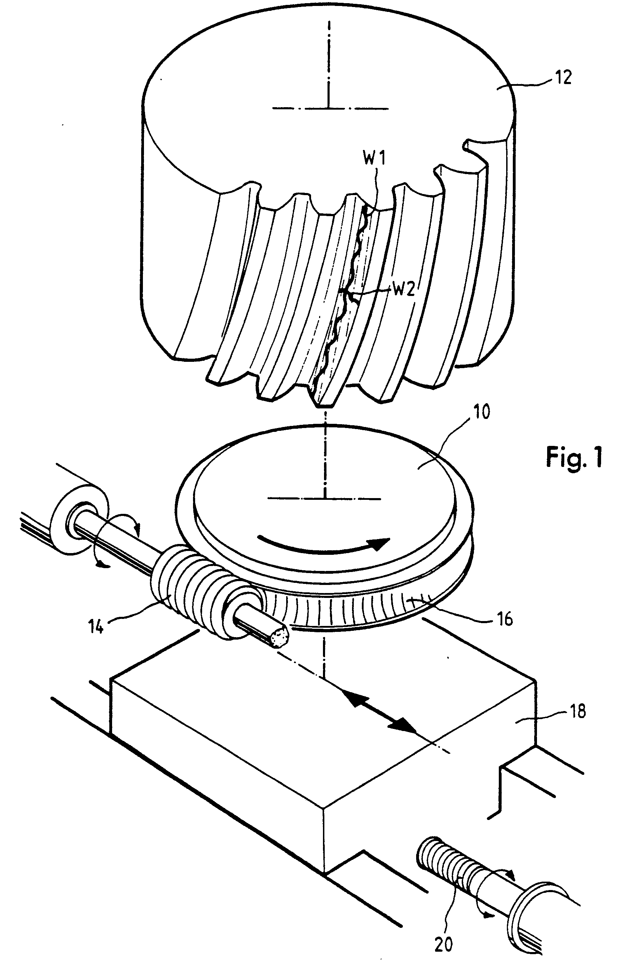

Es ist bekannt (Werkstatt und Betrieb, 113 (1980) 2, s. 97-100), dass die Zahnflanken von im Wälzverfahren verzahnten Zahnrädern wellenförmige Unebenheiten aufweisen. Diese Welligkeit tritt besonders deutlich bei schrägverzahnten Zahnrädern in Erscheinung und resultiert massgeblich aus Fehlern der Teilschnecke und der Modulspindel, mit denen die Wälzbewegung erzeugt wird, indem dem Drehtisch der Maschine, auf dem das Zahnrad aufgespannt ist, eine Drehbewegung mit vorbestimmter Geschwindigkeit und gleichzeitig eine Translationsbewegung mit vorbestimmter Geschwindigkeit gegeben wird. Die periodisch auftretenden, relativ langen und deshalb sehr gefährlichen Wellen sind auf Rundlauf-, Planschlag-, Taumel-, Axialschub- und Winkelgeschwindigkeitsfehler sowie Eingriffsteilungs- und Eingriffswinkelfehler der Teilschnecke und der Modulspindel zurückzuführen. Allgemein wirken sich alle Verzahnungsfehler des Drehtischantriebes in mehr oder weniger grossem Masse aus, wobei bei Schneckenantrieben auch noch Steigungsfehler und Fehler in der Schneckenlagerung (Exzentrizität) hinzukommen. Diese Fehler des Drehtischantriebes drücken sich beim bearbeiteten Zahnrad als periodische Welligkeit in Richtung des Profils (Zahnhöhe) und bei Schrägverzahnungen auch als periodische Welligkeit in Richtung der Zahnbreite aus (vgl. W1 bzw. W2 in Fig. 1).

Da die periodische Welligkeit (die sog. Ondulation) kontinuierlich periodisch und nicht nur sporadisch über dem Radumfang auftritt, ist sie eine besonders unangenehme Ursache für die Erzeugung von Schwingungen und Geräuschen.

Nach dem heutigen Stand der Technik wird versucht, die Zahnflanken-Welligkeit durch eine möglichst genaue Bearbeitung aller wichtigen Antriebselemente der Produktionsmaschine zu verhindern. Das ist aber nur mit Einschränkungen möglich, weil die im heutigen Stand der Technik eingehaltenen Toleranzen an grossen Zahnrädern so klein sind, dass sie messtechnisch nur mit Schwierigkeiten nachweisbar sind.

Aus der DE-A-2 161 243 ist es bekannt, Fehler in den Übertragungsmechanismen durch eine ausgleichende Regelung zu berücksichtigen, allerdings nur zur Herstellung des Zwanglaufes zwischen der Werkzeugdrehung und der Werkstückdrehung.

Aufgabe der Erfindung ist es, ein Verfahren und eine Anordnung zu schaffen, mit denen sich auf zuverlässige und wesentlich einfachere Weise die Zahnflanken-Welligkeit bei der Zahnradproduktion auf einer Produktionsmaschine beseitigen läßt.

Diese Aufgabe ist durch die im Kennzeichen der Patentansprüche 1 und 4 angegebenen Schritte bzw. Merkmale gelöst.

Die Erfindung beruht auf der überraschenden Erkenntnis, daß sich die Zahnflanken-Welligkeit, die bei der Zahnradproduktion in der Zahnflanke hervorgerufen wird, insgesamt auf Fehler im Übersetzungsverhältnis in dem Getriebestrang zwischen dem Drehtisch und seinen Antriebsvorrichtungen zurückführen läßt. Dieses Übersetzungsverhältnis wird dabei als das Verhältnis zwischen der Drehgeschwindigkeit und der Translationsgeschwindigkeit des Drehtisches definiert. Wenn der Drehtisch sich mit einer bestimmten vorgegebenen Drehgeschwindigkeit dreht und sich gleichzeitig mit einer bestimmten vorgegebenen Translationsgeschwindigkeit bewegt und in dem Getriebestrang keine Verzahnungsfehler od.dgl. enthalten sind, wird der Fehler dieses Übersetzungsverhältnisses null sein. Dieser Idealfall stellt sich in der Praxis aber nie ein, da sich Verzahnungsfehler an der Schnecke oder der Modulspindel im Mikrometerbereich nie ganz vermeiden lassen. Wenn beispielsweise eine Flanke der Schnecke eine unerwünschte Erhöhung aufweisen sollte, würde sich der Drehtisch mit etwas größerer Drehgeschwindigkeit drehen als es der vorgegebenen Drehgeschwindigkeit entspricht. Entsprechend ändert sich das zwischen der Drehgeschwindigkeit und der Translationsgeschwindigkeit definierte Übersetzungsverhältnis. Gleiches gilt, wenn der Getriebestrang lediglich aus zwei gesonderten Servomotoren besteht, die elektrisch synchronisiert dem Drehtisch eine Dreh- und eine Translationsgeschwindigkeit verleihen.

Erfindungsgemäß wird eine Abweichung von dem vorgegebenen Sollübersetzungsverhältnis bestimmt und damit die Zustellgröße eines Bearbeitungswerkzeuges korrigiert. Da es im praktischen Fall infolge unvermeidlicher mechanischer und elektrischer Trägheit in der Anordnung nicht möglich sein wird, die Abweichung vom Sollübersetzungsverhältnis zu bestimmen und gleichzeitig durch eine entsprechende Zustellung des Werkzeuges zu korrigieren, wird die für jede Zahnflanke beim erstmaligen Bearbeiten derselben ermittelte Abweichung unter Zuordnung zu der jeweiligen Wälzstellung des Zahnrades und der jeweiligen Hubstellung des Werkzeuges zunächst gespeichert. Es wird also zunächst ohne Korrektur bearbeitet. Bei einem anderen Bearbeitungsvorgang an derselben Zahnflanke wird dann die gespeicherte zugehörige Abweichung zeitgerecht zum Korrigieren der Zustellung des Bearbeitungswerkzeuges verwendet.

In der Ausgestaltung der Erfindung nach den Ansprüchen 2 und 5 wird bei einer Maschine, die ein weiteres Werkzeug aufweist, gleichzeitig die Zustellgröße des weiteren Werkzeuges mit der Übersetzungsverhältnisabweichung korrigiert, aber mit entgegengesetztem Vorzeichen.

In der Ausgestaltung der Erfindung nach den Ansprüchen 3 und 6 wird bei einer Maschine, bei der die Antriebsmotoren des Drehtisches mit Regelkreisen zur Drehzahlregelung dieser Motoren versehen sind, zusätzlich die Abtriebsgeschwindigkeit dieser Motoren mit Hilfe der Istdrehgeschwindigkeit und der Isttranslationsgeschwindigkeit des Tisches korrigiert, so daß die schließlich ermittelte Abweichung des vorgegebenen Übersetzungsverhältnisses insgesamt kleiner ist, wodurch sich die Zahnflanken-Welligkeit noch genauer beseitigen läßt.

Ausführungsbeispiele der Erfindung werden im folgenden unter Bezugnahme auf die Zeichnungen näher beschrieben.
Es zeigen

Fig. 1 in auseinandergezogener Teildarstellung den Antrieb eines Drehtisches einer Zahnradproduktionsmaschine mittels eines Teilgetriebes und einer Modulspindel,

Fig. 2 eine nach dem Wälzverfahren arbeitende Zahnflankenschleifmaschine für schrägverzahnte Zahnräder, die mit der Anordnung nach der Erfindung versehen ist, und

die Fig. 3a und 3b in ausführlicherer Darstellung Regelkreise der Antriebsvorrichtungen des Drehtisches der in Fig. 2 gezeigten Maschine.

Fig. 1 zeigt in auseinandergezogener Teildarstellung den Antrieb eines Drehtisches 10 einer nichtdargestellten Maschine zum Produzieren eines Zahnrades 12. Im Betrieb ist das Zahnrad 12 auf dem Drehtisch 10 aufgespannt. Der Drehtisch 10 wird durch ein Teilgetriebe aus einer Teilschnecke 14 und einem Teilschneckenrad 16 in Drehung versetzt. Der Drehtisch 10 ist auf einem Modulschlitten 18 drehbar gelagert, welcher durch eine Modulspindel 20, die in ein entsprechendes Gewinde in dem Modulschlitten einfaßt, verschiebbar ist, um dem Drehtisch 10 eine dem Zahnmodul entsprechende Translationsbewegung zu geben. An einer Zahnflanke des Zahnrades 12 sind schematisch Wellen W1 und W2 dargestellt, die durch Fehler in dem Getriebestrang 14, 16, 20 verursacht werden und insgesamt eine Zahnflanken-Welligkeit ergeben, die beseitigt werden soll. Die Wellen W1 werden durch Fehler der Modulspindel 20 verursacht, und die Wellen W2 werden durch Fehler des Schneckentriebes 14, 16 verursacht, wenn zwischen der Zahnflanke und einem Werkzeug (nicht dargestellt) eine Wälzbewegung dadurch erzeugt wird, daß der Drehtisch 10 mit aufgespanntem Zahnrad 12 durch den Schneckentrieb 14, 16 mit vorbestimmter Geschwindigkeit in Drehung versetzt und gleichzeitig durch die Modulspindel 20 mit vorbestimmter Translationsgeschwindigkeit verschoben wird.

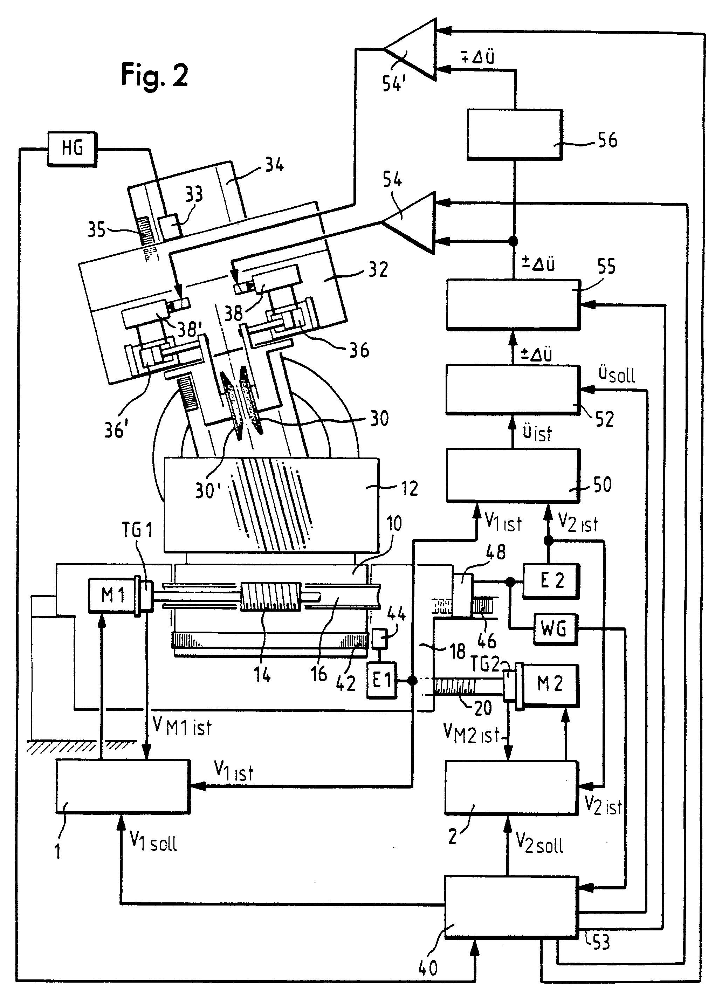

Fig. 2 zeigt die Erfindung am Beispiel der Verwendung bei einer nach dem Wälzverfahren arbeitenden Zahnradschleifmaschine zum Schleifen der Zahnflanken von schrägverzahnten Zahnrädern Der Aufbau und die Arbeitsweise einer solchen Maschine werden hier nur soweit beschrieben, wie es für das Verständnis der Erfindung erforderlich ist, da sie bekannt sind (vgl. z. B. DE-A-3 142 384; DE-C-3 215 066).

Die Maschine hat als Werkzeuge zwei Schleifscheiben 30,30′, mit denen zwei Zahnflanken gleichzeitig geschliffen werden. Ein Werkzeugträger 32 ist längs einer Schrägführung 34 verschiebbar, die auf den gewünschten Zahnschrägungswinkel eingestellt ist. Jeder Schleifscheibe ist ein Zustellantrieb 36 , 36′ zugeordnet, mit dessen Hilfe die Schleifscheibe zur Sahnflanke hin und von derselben wegbewegbar ist. In dem dargestellten Ausführungsbeispiel wird die durch die Zustellantriebe 36, 36′ erzeugte Zustellbewegung durch Servoventile 38, 38′ gesteuert. Ein Rechner 40 oder eine andere geeignete Vorgabeeinrichtung versorgt zudem die Servoventile 38, 38′ mit den entsprechenden Zustellbefehlen. In dem dargestellten Ausführungsbeispiel wird die Teilschnecke 14 durch einen Elektromotor M1 angetrieben, dessen Drehzahl mit Hilfe eines Regelkreises 1 geregelt wird. Der Regelkreis 1 empfängt eine Motorsollgeschwindigkeit $V_{1soll}$ aus dem Rechner 40, vergleicht diese mit einer von einem Tachogenerator TG1 gelieferten Motoristgeschwindigkeit $V_{M1ist}$ und steuert entsprechend den Motor M1 über einen in Fig. 2 nicht dargestellten Steuersatz.

Ein Motor M2 treibt die Modulspindel 20 an, die die Translationsbewegung des Modulschlittens 18 und damit des Drehtisches 10 erzeugt. Wie dem Motor M1 ist dem Motor M2 ein Tachogenerator TG2 zugeordnet, der die Istgeschwindigkeit $V_{M2ist}$ des Motors M2 und damit der Modulspindel 20 abfühlt und an einen Regelkreis 2 weiterleitet, der eine Sollgeschwindigkeit $V_{2soll}$ des Motors M2 ebenfalls aus dem Rechner 40 empfängt und den Motor M2 entsprechend der gebildeten Soll-Istwert-Differenz steuert. Das Vorhandensein der Regelkreise 1 und 2 ist für die Funktionsweise der Erfindung nicht wesentlich, aber vorteilhaft. Bei Verwendung von Motoren M1, M2, die eine ausreichende Drehzahlkonstanz auch ohne Regelkreise gewährleisten, wären letztere für die bis hierher beschriebene bekannte Maschine überflüssig, bei der Anordnung nach der Erfindung wären sie aber trotzdem vorteilhaft, weil sich das angestrebte Ergebnis verbessern läßt, was weiter unten ausführlicher dargelegt ist.

Dem Drehtisch 10 ist eine Meßeinrichtung E1 zugeordnet. Ein an dem Drehtisch befestigter inkrementeller Maßstab 42 bewegt sich an einem Abtastkopf 44 vorbei, der der Meßeinrichtung E1 Impulse liefert, die der Drehgeschwindigkeit des Drehtisches 10 entsprechen. Ein solches inkrementelles Meßsystem ist bekannt (vgl. z. B. DE-B-2 758 525).

An der Maschine ist gegenüber dem Modulschlitten 18 ein weiterer inkrementeller Maßstab 46 befestigt, an welchem sich ein mit dem Modulschlitten fest verbundener Abtastkopf 48 vorbeibewegt, der seine Ausgangsimpulse an eine Meßeinrichtung E2 abgibt, die auf diese Weise die Translationsgeschwindigkeit des Modulschlittens 18 und damit des Drehtisches 10 ermittelt. Dieses inkrementelle Meßsystem hat im wesentlichen den gleichen Aufbau wie das zuvor beschriebene. Unterschiedlich ist, daß der Maßstab 42 kreisförmig angeordnet ist, während der Maßstab 46 gerade ausgebildet ist.

Die Ausgänge der Meßeinrichtungen E1 und E2 sind mit zwei Eingängen eines Dividierers 50 verbunden. Der Dividierer empfängt auf diese Weise ein Signal aus der Meßeinrichtung E1, das die Istdrehgeschwindigkeit $V_{1ist}$ des Drehtisches 10 angibt, und aus der Meßeinrichtung E2 ein Signal, das die Isttranslationsgeschwindigkeit $V_{2ist}$ des Drehtisches 10 angibt. In dem Dividierer wird das Verhältnis $Ü_{ist} = V_{1ist}/V_{2ist}$ gebildet. Dieses Übersetzungsverhältnis $Ü_{ist}$ würde gleich einem in dem Rechner 40 gespeicherten Sollübersetzungsverhältnis $Ü_{soll} = V_{1soll}/V_{2soll}$ sein, wenn die Motoren M1 und M2 die gewünschte konstante Drehzahl haben und in dem Getriebestrang zwischen diesen Motoren und dem Drehtisch keinerlei Fehler vorhanden wären. Dieser Idealfall ergibt sich allerdings nie. Das Sollübersetzungsverhältnis $Ü_{soll}$ wird aus Verzahnungstabellen entnommen und vorher in den Rechner eingegeben. Der Rechner 40 ermittelt außerdem die Wälz- und Hubstellungen des Zahnrades 12 bzw. der Schleifscheiben 30, 30'. Zu diesem Zweck ist mit dem Ausgang des Abtastkopfes 48 außerdem ein Wälzstellungsgeber WG verbunden, der aus den Impulsen, die er empfängt, die jeweilige Wälzstellung des Zahnrades 12 ermittelt und an den Rechner 40 abgibt. Mit dem Werkzeugträger 32 ist ein Abtastkopf 33 verbunden, der sich an einem inkrementellen Maßstab 35 vorbeibewegt und mit einem Hubstellungsgeber HG verbunden ist, welcher aus den Impulsen, die er empfängt, die jeweilige Hubstellung der Schleifscheiben 30, 30' ermittelt und ebenfalls an den Rechner 40 abgibt. Der Zweck des Ermittelns der Wälz- und Hubstellungen ist weiter unten erläutert.

Dem Dividierer 50 ist ein Subtrahierer 52 nachgeschaltet, der einen weiteren Eingang hat, welcher mit einem Ausgang des Rechners 40 verbunden ist und aus diesem ein das Sollübersetzungsverhältnis $Ü_{soll}$ angebendes Signal empfängt. In dem Subtrahierer 52 wird die Differenz $ΔÜ$ zwischen dem Sollübersetzungsverhältnis $Ü_{soll}$ und dem Istübersetzungsverhältnis $Ü_{ist}$ aus dem Dividierer 50 gebildet. Einem dieser vorzeichenbehafteten Übersetzungsverhältnisdifferenz entsprechendes Signal wird von dem Ausgang des Subtrahierers 52 an einen Eingang eines Speichers 55 angelegt, der es speichert. Die vom Speicher 55 gespeicherten Signale aus dem Subtrahierer 52 werden durch die aus dem Rechner 40 über dessen Wälz- und Hubstellungsausgang 53 empfangenen Signale der entsprechenden Wälzstellung des Zahnrades und der entsprechenden Hubstellung der Schleifscheiben zugeordnet. Der Speicher 55 erfüllt dabei mit Hilfe des Rechners 40 die Aufgabe, die mechanische und elektrische Trägheit der Anordnung zu beheben, welche sich in einer Zeitverzögerung zwischen dem Zeitpunkt der Feststellung der Istübersetzung $Ü_{ist}$ und dem Zeitpunkt der Ausführung der Korrektur mittels der Schleifscheibe an der Zahnflanke ausdrücken würde. Der Ausgang des Speichers 55 ist mit einem Eingang eines Summierverstärkers 54 verbunden, der an seinem weiteren Eingang aus dem Rechner 40 ein Signal empfängt, das der Zustellung der Schleifscheibe 30 entspricht. Der Summierverstärker 54 addiert oder subtrahiert von dem Zustellwert die Übersetzungsverhältnisdifferenz $ΔÜ$ (je nach deren Vorzeichen) und gibt an seinem Ausgang ein entsprechend korrigiertes Zustellsignal an das Servoventil 38 ab, so daß die Schleifscheibe 30 entsprechend mehr oder weniger zugestellt wird.

In dem hier beschriebenen Ausführungsbeispiel hat die weitere Schleifscheibe 30' nicht nur den entsprechenden Zustellantrieb 36' und das entsprechende Servoventil 38', sondern auch einen zugeordneten entsprechenden Summierverstärker 54'. Der Unterschied zwischen der Zustellung der Schleifscheiben 30 und 30' besteht lediglich darin, daß der Subtrahierer das der Übersetzungsverhältnisdifferenz entsprechende Signal $±ΔÜ$ über einen Vorzeichenumkehrer oder Inverter 56 mit umgekehrtem Vorzeichen (d.h. $∓ΔÜ$) an den Summierverstärker 54' abgibt, weil die durch die Schleifscheibe 30' geschliffene Zahnflanke in eine zu der Richtung der durch die Schleifscheibe 30 geschliffenen Zahnflanke entgegengesetzte Richtung weist.

Beim erstmaligen Schleifen einer Zahnflanke wird also vorerst geschliffen, ohne daß mit der Übersetzungsverhältnisdifferenz $ΔÜ$ korrigiert wird. Beim Schleifen dieser Zahnflanke werden gleichzeitig die Wälz- und Hubstellungen mit Hilfe des Rechners 40, des Wälzstellungsgebers WG und des Hubstellungsgebers HG ermittelt, und die zugehörigen Daten werden vom Rechner aus über den Wälz- und Hubstellungsausgang 53 in den Speicher 55 eingegeben. Diese Daten werden dann bei einem anderen Schleifvorgang jeweils an derselben Zahnflanke in einem anderen Schleifumgang entsprechend der Wälzstellung des Zahnrades 12 und der Hubstellung der Schleifscheibe 30, zeitgerecht durch den Rechner 40 gesteuert, als Übersetzungsverhältnisdifferenzen $±ΔÜ$ an den Eingang des Summierverstärkers 54 (und mit umgekehrtem Vorzeichen an den Eingang des Summierverstärkers 54') angelegt, der dann das Servoventil 38 (38') ansteuert, so daß die Schleifscheibe 30 (30') entsprechend mehr oder weniger zugestellt wird. Zudem können die gemessenen Übersetzungsverhältnisdifferenzen mit den vom Subtrahierer 52 gelieferten im Speicher 55 verglichen und als Erfahrungswerte gesammelt und entsprechend ausgewertet werden, so daß sich später unter günstigen Voraussetzungen ein erneuter Meßvorgang erübrigt. Der vorstehend verwendete Ausdruck "zeitgerecht" bedeutet hier die Berücksichtigung einer der genannten Zeitverzögerung entsprechenden Vorhaltzeit, die im Rechner 40 als eine Konstante eingegeben ist.

In dem in Fig. 2 dargestellten Blockschaltbild der Anordnung nach der Erfindung werden auf den mit Pfeilen gekennzeichneten Leitungen Spannungen oder Impulse übertragen. Die jeweils erforderlichen Digital/Analog-Wandler und Analog/Digital-Wandler sind in den mit einem Pfeil dargestellten Leitungen der Überisichtlichkeit halber aber weggelassen worden.

Mit der vorstehend unter Bezugnahme auf Fig. 2 beschriebenen Anordnung lassen sich durch Fehler in dem Getriebestrang zwischen den Motoren M1 und M2 verursachte Welligkeiten in den Zahnflanken auf einfache und zuverlässige Weise vermeiden, indem eine den Fehlern in dem Getriebestrang entsprechende Geschwindigkeitsüberetzungsverhältnisdifferenz bestimmt und damit die Zustellung der Schleifscheiben entsprechend korrigiert wird.

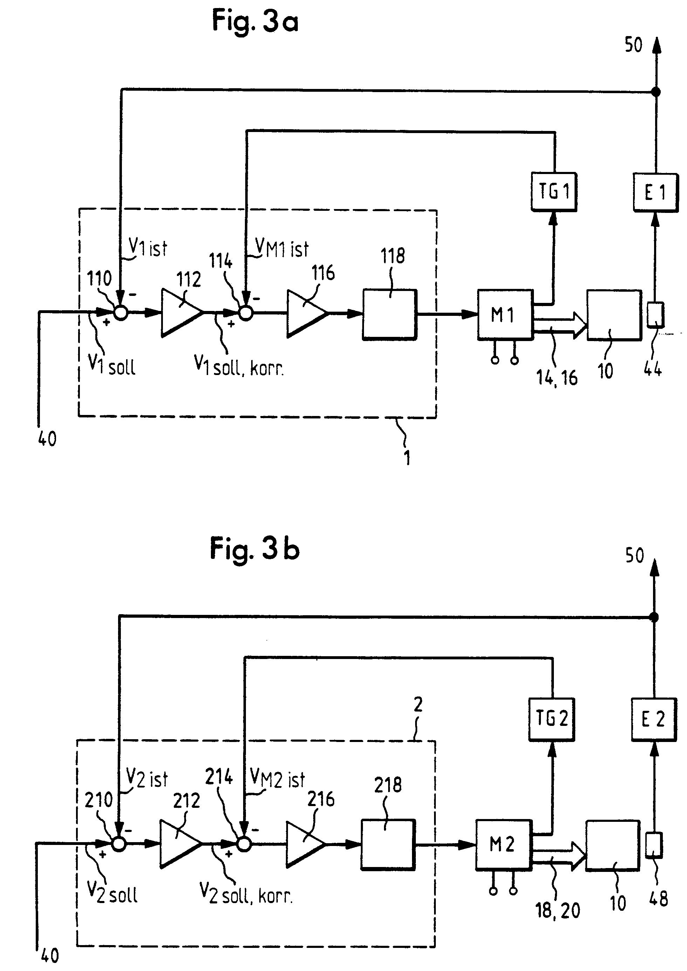

In den Fig. 3A und 3B sind die Regelkreise 1 und 2 ausführlicher dargestellt. Erfindungsgemäß wird in diesen Regelkreisen mit Hilfe der Ausgangssignale der Meßeinrichtungen E1 und E2 eine weitere Korrektur vorgenommen, um die Genauigkeit der zu bestimmenden Übersetzungsverhältnisdifferenz $\Delta\ddot{U}$ zu verbessern und gleichzeitig betragsmäßig zu verringern. Da der schaltungsmäßige Aufbau in beiden Fällen übereinstimmt, werden im folgenden lediglich der Aufbau und die Arbeitsweise der in Fig. 3 a dargestellten Anordnung beschrieben.

Der Regelkreis 1, der in Fig. 3 a mit einer gestrichelten Linie umrahmt ist und dem Regelkreis 1 in Fig. 2 entspricht, enthält einen Summierpunkt 110, der ein die Solldrehgeschwindigkeit $V_{1soll}$ des Drehtisches 10 angebendes Signal aus dem Rechner 40 und ein die Istdrehgeschwindigkeit $V_{1ist}$ des Drehtisches 10 angebendes Signal aus der Meßeinrichtung E1 empfängt, addiert und als Ergebnis ein der korrigierten Solldrehgeschwindigkeit $V_{1soll,korr.}$ entsprechendes Signal an einen weiteren Summierpunkt 114 abgibt, welcher außerdem die Motoristdrehgeschwindigkeit $V_{M1ist}$ in Form eines entsprechenden Signals aus dem Tachogenerator TG1 empfängt. Der Summierpunkt 114 gibt ein aus der Addition der beiden von ihm empfangenen Signale gebildetes Ausgangssignal über einen weiteren Regelverstärker 116 an einen Steuersatz 118 ab, der schließlich die Drehzahl des Motors M1 entsprechend nachstellt und so bereits eine Vorkorrektur der Drehgeschwindigkeit des Drehtisches 10 vornimmt. Ohne diese Vorkorrektur würden Fehler im Bereich der Teilschnecke bereits voll in die Drehgeschwindigkeit des Drehtisches 10 eingehen und müßten dann durch eine entsprechend große Zustellkorrektur der Schleifscheiben korrigiert werden.

Mit der in Fig. 3 b dargestellten Anordnung erfolgt eine entsprechende Korrektur der Translationsgeschwindigkeit des Tisches 10 (wobei in Fig. 3 b die Elemente gegenüber den entsprechenden Elementen in Fig. 3 a um 100 größere Bezugszahlen tragen)

## Patentansprüche

1. Verfahren zum Beseitigen der Zahnflanken-Welligkeit bei der Zahnradproduktion auf einer Produktionsmaschine, auf der eine einem Evolventenprofil entsprechende Wälzbewegung zwischen einer Zahnflanke und einem Bearbeitungswerkzeug (30) dadurch erzeugt wird, dass ein Drehtisch (10) mit aufgespanntem Zahnrad (12) mit vorbestimmter Geschwindigkeit $(v_1)$ in Drehung versetzt und gleichzeitig mit vorbestimmter Translationsgeschwindigkeit $(v_2)$ verschoben wird, gekennzeichnet durch folgende Schritte:

a) Einem ersten Bearbeitungsvorgang ohne jegliche Kompensationsmassnahmen,

b) Festlegen eines Sollübersetzungsverhältnisses $(\ddot{U}_{soll})$ zwischen einer Solldrehgeschwindigkeit $(V_{soll})$ und einer Solltranslationsgeschwindigkeit $(V_{2soll})$ des Drehtisches,

c) Messen der Istdrehgeschwindigkeit $(V_{1ist})$ und der Isttranslationsgeschwindigkeit $(V_{2ist})$ des Drehtisches während des Bearbeitungsvorganges an jeder Zahnflanke,

d) Bestimmen eines Istübersetzungsverhältnisses $(\ddot{U}_{ist})$ zwischen der Istdrehgeschwindigkeit $(V_{1ist})$ und der Isttranslationsgeschwindigkeit $(V_{2ist})$,

e) Bilden und Speichern der Differenz $(\pm\Delta\ddot{U})$ zwischen dem Soll- und dem Istübersetzungsverhältnis unter Zuordnung zu der jeweiligen Wälzstellung des Zahnrades und der jeweiligen Hubstellung des Werkzeuges, und

f) Korrigieren einer Zustellgrösse des Werkzeuges mit der Soll-Ist-Wert-Differenz $(\pm\Delta\ddot{U})$ während eines der nachfolgenden Bearbeitungsvorgänge an jeder Zahnflanke bei den zugehörigen Wälz- und Hubstellungen.

2) Verfahren nach Anspruch 1 für eine Maschine mit einem weiteren Werkzeug (30'), das mit einer weiteren Zahnflanke in Berührung gebracht wird, die in eine zu der einen Zahnflanke entgegengesetzte Richtung weist, dadurch gekennzeichnet, dass in dem Schritt f) die Zustellgrösse der Werkzeuge mit im Betrag gleichen und im Vorzeichen entgegengesetzten Soll-Istwert-Differenzen $(\pm\Delta\ddot{U}, \mp\Delta\ddot{U})$ gleichzeitig korrigiert werden.

3. Verfahren nach Anspruch 1 oder 2, dadurch gekennzeichnet, dass vor dem Ausführen des Schrittes c) die Solldrehgeschwindigkeit $(V_{1soll})$ und die Solltranslationsgeschwindigkeit $(V_{2soll})$

.mittels im Schritt b) gemessenen beiden Istgeschwindigkeiten ($V_{1ist}$ bzw. $V_{2ist}$) grob vorkorrigiert werden.

4. Anordnung zu Zahnradproduktion auf einer Produktionsmaschine, die einen Drehtisch (10) für das Zahnrad (12) hat, wobei dem Drehtisch (10) eine erste und eine zweite Antriebsvorrichtung zugeordnet ist, mittels welchen zur Erzeugung einer einem Evolventenprofil entsprechenden Wälzbewegung zwischen einer Zahnflanke und einem Bearbeitungswerkzeug (30) der Drehtisch (10) mit aufgespanntem Zahnrad (12) mit vorbestimmter Geschwindigkeit ($V_1$) in Drehung versetzbar bzw. gleichzeitig mit vorbestimmter Translationsgeschwindigkeit ($V_2$) verschiebbar ist, und wobei dem Drehtisch (10) Messeinrichtungen (E1, E2) zum Überwachen der beiden Geschwindigkeiten zugeordnet sind, gekennzeichnet durch:

a) einen Rechner (40) zum Festlegen eines Sollübersetzungsverhältnisses ($Ü_{soll}$) zwischen einer Solldrehgeschwindigkeit ($V_{1soll}$) und einer Solltranslationsgeschwindigkeit ($V_{2soll}$) des Drehtisches (10),

b) mit dem Rechner (40) verbundene Wälz- und Hubstellungsgeber (WG, HG) zum Bestimmen der Wälzstellung des Zahnrades (12) bzw. der Hubstellung des Werkzeuges (30),

c) eine Einrichtung (50) zum Bestimmen eines Istübersetzungsverhältnisses ($Ü_{ist}$) zwischen der Istdrehgeschwindigkeit ($V_{1ist}$) und der Isttranslationsgeschwindigkeit ($V_{2ist}$), die durch die Messeinrichtungen (E1, E2) ermittelt worden sind,

d) eine Einrichtung (52) zum Bilden der Differenz ($\pm \Delta Ü$) zwischen dem Soll- und dem Istübersetzungsverhältnis,

e) eine mit dem Ausgang der Differenzbildungseinrichtung (52) und mit einem Wälz- und Hubstellungsausgang (53) des Rechners (40) verbundene Einrichtung (55) zum Speichern der Soll-Istwert-Differenz ($\pm \Delta Ü$) unter Zuordnung zu der jeweiligen Wälzstellung des Zahnrades (12) und der jeweiligen Hubstellung des Werkzeuges (30) und

f) eine mit dem Ausgang der Speichereinrichtung (55) und einem Servoventil (38) des Werkzeuges (30) verbundene Einrichtung (54) zum Korrigieren einer Zustellgrösse des Werkzeuges mit der Soll-Istwert-Differenz ($\pm \Delta Ü$).

5. Anordnung nach Anspruch 4 für eine Maschine mit einem weiteren Werkzeug (3o'), das mit einer weiteren Zahnflanke in Berührung gebracht wird, die in eine zu der einen Zahnflanke entgegengesetzte Richtung weist, gekennzeichnet durch eine mit einem weiteren Servoventil (38') verbundene weitere Einrichtung (54'), die zum Korrigieren einer weiteren Zustellgrösse des weiteren Werkzeuges mit der Soll-Istwert-Differenz ($\Delta Ü$) mit dem Ausgang der Speichereinrichtung (55) über eine Vorzeichenumkehreinrichtung (56) verbunden ist.

6. Anordnung nach Anspruch 4 oder 5 für eine Maschine, bei der die beiden Antriebsvorrichtungen jeweils aus einem mit einem Geschwindigkeitsregelkreis versehenen Motor ($M_1$; $M_2$) bestehen, die über einen Getriebestrang aus einem Teilgetriebe (14, 16) bzw. einer Modulspindel (20) den Drehtisch (10) antreiben, dadurch gekennzeichnet, dass in jedem Drehzahlregelkreis (1; 2) in Reihe vor dem Motor (M1; M2) ein Summierpunkt (110; 210) für die Sollgeschwindigkeit ($V_{1soll}$; $V_{2soll}$) und die Istgeschwindig keit ($V_{1ist}$, $V_{2ist}$) des Drehtisches (10) zum Erzeugen einer grob vorkorrigierten Sollgeschwindigkeit ($V_{1soll,korr}$, $V_{2soll,korr}$) des Drehtisches vorgesehen ist.

**Claims**

1. Method of eliminating tooth flank waviness in gear production on a production machine on which a rolling movement conforming to an involute profile is generated between a tooth flank and a machining tool (30), in that a turntable (10) with clamped gear (12) is set in rotation with predetermined velocity ($v_1$) and simultaneously displaced with predetermined translation velocity ($v_2$), characterized by the following steps:

a) a first machining operation with no compensation measures,

b) determination of a desired transmission ratio ($Ü_{soll}$) between a desired rotation velocity ($V_{soll}$) and a desired translation velocity ($V_{2soll}$) of the turntable,

c) measurement of the actual rotation velocity ($V_{1ist}$) and of the actual translation velocity ($V_{2ist}$) of the turntable during the machining process on each tooth flank,

d) determination of an actual transmission ratio ($Ü_{ist}$) between the actual rotation velocity ($V_{1ist}$) and the actual translation velocity ($V_{2ist}$),

e) formation and storage of the differential ($\pm \Delta Ü$) between the desired transmission ratio and the actual transmission ratio with association to the instantaneous rolling position of the gear and to the instantaneous stroke position of the tool, and

f) correction of an infeed value of the tool with the desired-actual value differential ($\pm \Delta Ü$) during one of the following machining operations on each tooth flank in the associated rolling and stroke positions.

2. Method according to Claim 1 for a machine having a further tool (30') which is brought into contact with a further tooth flank which faces in a direction opposite to the one tooth flank, characterized in that in step f) the infeed value of the tools are corrected simultaneously with desired-actual value differentials ($\pm \Delta Ü$, $\pm \Delta Ü$) of equal value and of opposite sign.

3. Method according to Claim 1 or 2, characterized in that before the execution of step c) the desired rotation velocity ($V_{1soll}$) and the desired translation velocity ($V_{2soll}$) are roughly precorrected by means of the two actual velocities ($V_{1ist}$ and $V_{2ist}$) measured in step b).

4. Arrangement for gear production on a production machine which has a turntable (10) for the gear (12), wherein a first and a second drive device is associated with the turntable (10), by means of which the turntable (10) with clamped gear (12) can be set in rotation with predetermined velocity ($v_1$) and simultaneously can be displaced with predetermined translation velocity ($v_2$) in order to generate a rolling movement conforming to an involute profile between a tooth flank and a machining tool (30), and wherein measuring devices (E1, E2) to monitor the two velocities are associated with the turntable (10), characterized by:

a) a computer (40) to determine a desired transmission ratio ($\ddot{U}_{soll}$) between a desired rotation velocity ($V_{1soll}$) and a desired translation velocity ($V_{2soll}$) of the turntable (10),

b) rolling and stroke position transducers (WG, HG) connected to the computer (40) to determine the rolling postion of the gear (12) and the stroke position of the tool (30) respectively,

c) a device (50) to determine an actual transmission ratio ($\ddot{U}_{ist}$) between the actual rotation velocity ($V_{1ist}$) and the actual translation velocity ($V_{2ist}$) which have been determined by the measuring devices (E1, E2),

d) a device (52) to form the difference ($\pm \Delta \ddot{U}$) between the desired transmission ratio and the actual transmission ratio,

e) a device connected to the output of the difference forming device (52) and to a rolling and stroke position output (53) of the computer (40) to store the desired-actual value differential ($\pm \Delta \ddot{U}$) with association to the instantaneous rolling position of the gear (12) and to the instantaneous stroke position of the tool (30) and

f) a device (54) connected to the output of the storage device (55) and to a servovalve (38) of the tool (30) to correct an infeed value of the tool with the desired-actual value differential ($\pm \Delta \ddot{U}$).

5. Arrangement according to Claim 4 for a machine having a further tool (30') which is brought into contact with a further tooth flank which faces in a direction op posite to the one tooth flank, characterized by a further device (54') connected to a further servovalve (38') which is connected to the output of the storage device (55) through a sign reversal device (56) in order to correct a further infeed value of the further tool with the desiredactual value differential ($\pm \Delta \ddot{U}$).

6. Arrangement according to Claim 4 or 5 for a machine wherein the two drive devices consist respectively of a motor (M1, M2) provided with a velocity regulating circuit, which drive the turntable (10) through a transmission line comprising an indexing transmission (14, 16) and a module spindle (20), characterized in that an addition point (110, 210) for the desired velocity ($V_{1soll}$; $V_{2soll}$) and the actual velocity ($V_{1ist}$, $V_{2ist}$ of the turntable (10) is provided in series in front of the motor (M1, M2) in each speed regulating circuit (1, 2) in order to generate a roughly precorrected desired velocity ($V_{1soll,korr.}$;

$V_{2soll,korr.}$) of the turntable.

**Revendications**

1. Procédé pour éliminer les ondulations sur les faces de dents dans la fabrication des roues dentées dans une machine de fabrication dans laquelle on crée, entre la face de la dent et l'outil d'usinage (30) un mouvement de roulement sans glissement, selon le profil d'une développante, au moyen d'une platine tournante (10) portant une roue dentée (12), ladite platine étant mise en rotation à une vitesse prédéterminée (V1) et se déplaçant simultanément à une vitesse de translation prédéterminée (V2), caractérisé par les phases suivantes:

a) première phase d'usinage sans aucune mesure de compensation,

b) fixation d'un rapport de multiplication nominal (U nom.) entre la vitesse de rotation nominale (V nom.) et la vitesse de translation nominale (V 2nom) de la platine tournante,

c) mesure de la vitesse de rotation effective (V1 eff) et de la vitesse de translation effective (V2 eff.) de la platine tournante pendant l'usinage sur chaque face de dent,

d) détermination d'un rapport de multiplication effectif (U eff.) entre la vitesse de rotation effective (V1 eff.) et la vitesse de translation effective (V2 eff.),

e) calcul et mémorisation de la différence ($\pm \Delta U$) entre les rapports de multiplication nominal et effectif rapportés à chaque position en rotation de la roue dentée et à la position en hauteur correspondante de l'outil, et

f) correction de la grandeur de réglage de l'outil par la différence nominal/effectif ($\pm \Delta U$) au cours de l'une des opérations d'usinage subséquentes effectuées sur chaque face de dent pour les positions en hauteur et en rotation correspondantes.

2. Procédé selon la revendication 1, destiné à une machine comportant un second outil (30') qui est mis en contact avec une seconde face de la dent, dans une direction opposée à celle de la première face, caractérisé par le fait que, lors de la phase f), la grandeur de réglage de l'outil est comparée et peut être simultanément corrigée avec les différences nominal/effectif de même valeur et de signes opposés ($\pm \Delta U$, $\mp \Delta U$).

3. Procédé selon les revendications 1 ou 2, caractérisé par le fait qu'avant la réalisation de la phase c), la vitesse de rotation nominale (V1 nom.) et la vitesse de translation nominale (V2 nom.) peuvent être corrigées grossièrement au moyen de deux valeurs effectives (V1 eff. ou V2 eff.) mesurées lors de la phase b).

4. Dispositif pour la fabrication de roues dentées sur une machine de fabrication présentant une platine tournante (10) pour la roue dentée, dans laquelle un premier et un deuxième mécanismes d'avance sont associés à la platine tournante (10), au moyen desquels ladite platine tournante (10) portant la roue dentée (12) peut être mise en rotation à une vitesse prédéterminée (V1), avec déplacement simultané à une vitesse de translation prédéterminée (V2), en vue de la réalisation d'un mouvement de roulement sans glissement selon le profil d'une développante entre la face de la dent et l'outil d'usinage (30) et dans lequel des dispositifs de mesure (E1, E2) sont associés à la platine pour le contrôle des deux vitesses, caractérisé par

a) un ordinateur (40) pour la détermination du rapport de multiplication nominal (U nom.) entre la vitesse de rotation nominale (V1 nom.) et la vitesse de translation nominale (V2 nom.) de la platine tournante (10),

b) des indicateurs de position en hauteur et de rotation (IH, IR), associés à l'ordinateur (40) pour la détermination de la position en rotation de la roue dentée (12) ou de la position en hauteur de l'outil (30),

c) un dispositif (50) pour la détermination du rapport de multiplication effectif (U eff.) entre la vitesse de rotation effective (V1 eff.) et la vitesse de translation effective (V2 eff.), qui ont été déterminées au moyen des appareils de mesure (E1, E2),

d) un dispositif (52) pour le calcul de la différence ($\pm \Delta U$) entre les rapports de multiplication effectif et nominal,

e) un dispositif (55) raccordé à la sortie du dispositif de calcul de la différence (52) ainsi qu'à la sortie de réglage en hauteur et en rotation (53) de l'ordinateur (40), pour la mémorisation de la différence valeur effective/valeur nominale ($\pm \Delta U$) en correspondance avec la position en rotation de la roue dentée (12) et la position en hauteur de l'outil (30), et

f) un dispositif (54) raccordé à la sortie du dispositif de mémorisation (55) ainsi qu'à une servo-soupape (38) de l'outil (30) pour la correction de la grandeur de réglage de l'outil par la différence valeur nominale/valeur effective ($\pm \Delta U$).

Fig. 1

Fig. 2

0 140 831

## Fig. 3a

## Fig. 3b